# EUROPEAN PATENT APPLICATION

(11) **EP 4 815 150 A1**
(43) Date of publication of application: **30.09.2026**
(21) Application number: 25895296.9
(22) Date of filing: 01.10.2025
(51) Int. Cl.: H01M 50/289, H01M 50/262

(54) **BATTERY PACK**

(30) Priority: 25.11.2024 KR 20240169262
(71) Applicant: LG Energy Solution, Ltd., Seoul 07335 (KR)
(72) Inventor: PARK, Seung Chul, Daejeon 34122 (KR); SHIN, Ju Hwan, Daejeon 34122 (KR)
(74) Representative: Plasseraud IP
(86) International application number: PCT/KR2025/015615
(87) International publication number: WO 2026/111164

(57) **Abstract**

According to exemplary embodiments, a battery pack is provided. The battery pack may include: a base plate; first and second battery cell assemblies on the base plate; and a cross beam separating the first and second battery cell assemblies in a first direction. Each of the first and second battery cell assemblies may include: a cell stack comprising battery cells arranged in the first direction; a first side beam on a first side surface of the cell stack in the first direction; and a second side beam on a second side surface of the cell stack in the first direction. The second side beam of the first battery cell assembly may include a portion interposed between the cross beam and the first side beam of the second battery cell assembly.

## Description

### [Technical Field]

The present disclosure relates to a battery pack. This application claims the benefit of Korean Patent Application No. 10-2024-0169262, filed on November 25, 2024, the disclosure of which is incorporated herein by reference.

### [Background]

Secondary batteries, unlike primary batteries, are capable of being charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has been dramatically reduced, and as the driving range of battery electric vehicles (BEVs) has increased to a level equivalent to that of fuel vehicles, the main applications of secondary batteries are shifting from mobile devices to mobility.

The technological development trend for mobility secondary batteries is the improvement of energy density and safety. Here, the energy density of a secondary battery is the maximum electrical energy that the secondary battery can store divided by the mass of the secondary battery. The high energy density of secondary batteries is directly related to the driving efficiency and range of mobility, and various studies are being conducted to improve the energy density of secondary batteries.

One of the most powerful solutions to increase the energy density of secondary batteries is the module-less type battery pack (or cell-to-pack structure). The module-less type battery pack eliminates the module covering the battery cells, thereby dramatically reducing the mass of the battery pack.

### [Summary]

### [Technical Problem]

The technical problem to be solved by the technical idea of the present disclosure is to provide a battery pack with improved assembly workability and impact resistance.

### [Technical Solution]

According to exemplary embodiments of the present disclosure for solving the above-described problem, a battery pack is provided. The battery pack may include: a base plate; first and second battery cell assemblies on the base plate; and a cross beam separating the first and second battery cell assemblies in a first direction. Each of the first and second battery cell assemblies may include: a cell stack comprising battery cells arranged in the first direction; a first side beam on a first side surface of the cell stack in the first direction; and a second side beam on a second side surface of the cell stack in the first direction. The second side beam of the first battery cell assembly may include a portion interposed between the cross beam and the first side beam of the second battery cell assembly.

The second side beam may have a shape complementary to each of the cross beam and the first side beam.

The first side beam may include a first protruding part protruding in the first direction. The second side beam may include a second protruding part protruding in the first direction. The second protruding part may be interposed between the cross beam and the first protruding part.

The second protruding part may include: a first surface in contact with the cross beam; and a second surface in contact with the first protruding part.

The first surface and the second surface may be parallel.

Each of the first surface and the second surface may be parallel to a mounting surface of the base plate.

The second surface may include a portion inclined with respect to the first surface.

The second surface may include: a first portion parallel to the first surface; a second portion parallel to the first surface; and an inclined third portion connecting the first portion and the second portion.

The first portion may be closer to the first battery cell assembly in the first direction than the second portion. The first portion may be closer to a mounting surface of the base plate than the second portion.

The battery pack may further include a bolt penetrating the cross beam, the second side beam of the first battery cell assembly, and the first side beam of the second battery cell assembly.

The bolt may be fastened to the base plate.

The battery pack may further include: a center beam extending in the first direction on the base plate; and a weld layer between the center beam and the cross beam.

The battery pack may further include: side walls on the base plate and surrounding the center beam, the cross beam, and the first and second battery cell assemblies; and a weld layer between the cross beam and the side walls.

A height of the first side beam in a direction perpendicular to a mounting surface of the base plate may be greater than a height of the cell stack in the direction perpendicular to the mounting surface. A height of the second side beam in the direction perpendicular to the mounting surface may be greater than the height of the cell stack in the direction perpendicular to the mounting surface.

A height of the first side beam in the direction perpendicular to the mounting surface may be equal to a height of the second side beam in the direction perpendicular to the mounting surface.

### [Advantageous Effects]

According to exemplary embodiments of the present disclosure, by assembling the battery pack by bolting the side beams to the cross beam, the assemblability and impact resistance of the battery pack can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a top view showing a battery pack according to exemplary embodiments.
FIG. 2 is a cross-sectional view showing the battery pack according to exemplary embodiments.
FIG. 3 is a partial enlarged view showing the battery pack according to exemplary embodiments.
FIG. 4 is a cross-sectional view showing the battery pack according to exemplary embodiments.
FIG. 5 is a partial enlarged view showing the battery pack according to exemplary embodiments.
FIG. 6 is a partial enlarged view showing the battery pack according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing the disclosure.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

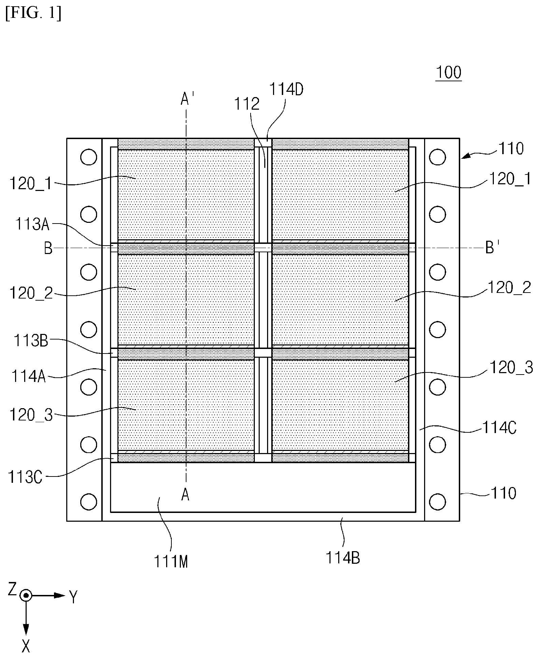

FIG. 1 is a top view showing a battery pack 100 according to exemplary embodiments.

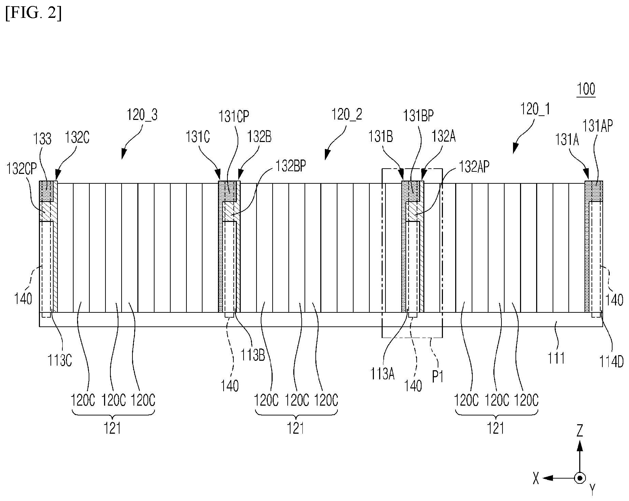

FIG. 2 is a cross-sectional view showing the battery pack 100 according to exemplary embodiments. FIG. 2 shows a cross-section along line A-A' of FIG. 1.

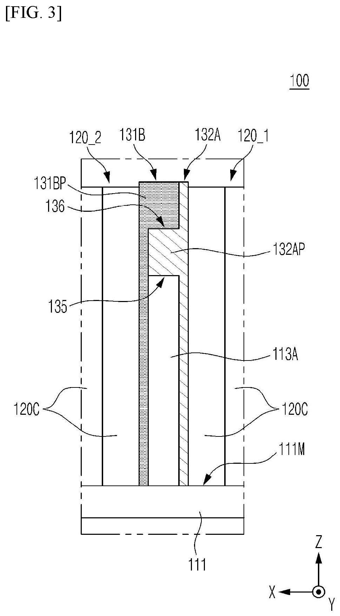

FIG. 3 is an enlarged cross-sectional view showing the battery pack 100 according to exemplary embodiments. FIG. 3 is an enlarged view of P1 in FIG. 2. The illustration of the bolt (140 in FIG. 2) is omitted in FIG. 3.

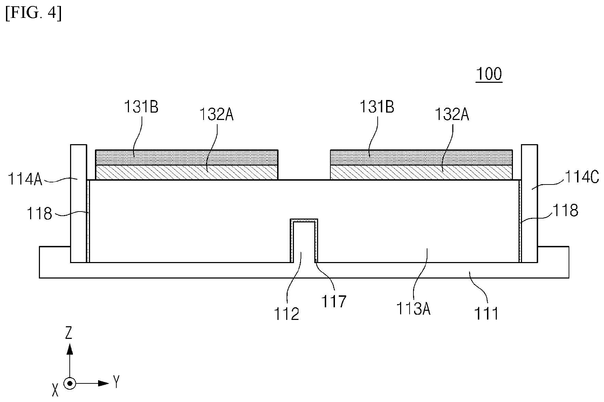

FIG. 4 is a cross-sectional view showing the battery pack 100 according to exemplary embodiments. FIG. 4 shows a cross-section along line B-B' of FIG. 1.

Referring to FIGS. 1 to 4, the battery pack 100 may include a pack housing 110 and battery cell assemblies 120_1, 120_2, 120_3. The battery pack 100 may be the final form of a battery system mounted in mobility and the like.

The pack housing 110 may provide a space for disposing the plurality of battery cell assemblies 120_1, 120_2, 120_3. The pack housing 110 may include a base plate 111, a center beam 112, cross beams 113A, 113B, 113C, and side walls 114A, 114B, 114C, 114D.

Two directions substantially parallel to the mounting surface 111M of the base plate 111 are defined as the X direction and the Y direction, and a direction substantially perpendicular to the mounting surface 111M of the base plate 111 is defined as the Z direction. Each of the X direction, Y direction, and Z direction may be substantially perpendicular to each other. Unless otherwise specified, the definitions of directions are the same for the following drawings.

The center beam 112 may be on the base plate 111. According to exemplary embodiments, the center beam 112 may protrude from the mounting surface 111M of the base plate 111. The center beam 112 may extend in the X direction. The center beam 112 may separate the battery cell assemblies 120_1, 120_2, 120_3 in the Y direction.

The cross beams 113A, 113B, 113C may be on the base plate 111. Each of the cross beams 113A, 113B, 113C may intersect the center beam 112. Each of the cross beams 113A, 113B, 113C may extend in the Y direction. Each of the cross beams 113A, 113B, and 113C may separate the battery cell assemblies 120_1, 120_2, 120_3 in the X direction.

The side walls 114A, 114B, 114C, 114D may be connected to the base plate 111 and may be substantially perpendicular to the base plate 111. The side walls 114A, 114B, 114C, 114D may extend along the edge of the base plate 111. The side walls 114A, 114B, 114C, 114D may surround the center beam 112, the cross beams 113A, 113B, 113C, and the battery cell assemblies 120_1, 120_2, 120_3. Each of the side walls 114A, 114C may be substantially parallel to the center beam 112. Each of the side walls 114A, 114C may be substantially perpendicular to each of the cross beams 113A, 113B, 113C. Each of the side walls 114B, 114D may be substantially perpendicular to the center beam 112. Each of the side walls 114B, 114D may be substantially parallel to each of the cross beams 113A, 113B, 113C.

Each of the cross beams 113A, 113B, 113C may be coupled to the pack housing 110 by weld layers 117, 118.

Each of the cross beams 113A, 113B, 113C may be coupled to the center beam 112 by the weld layer 117. The weld layer 117 may be interposed between the center beam 112 and each of the cross beams 113A, 113B, 113C. The weld layer 117 may contact the upper surface of the center beam 112. The weld layer 117 may contact both side surfaces of the center beam 112.

Each of the cross beams 113A, 113B, 113C may be coupled to the side walls 114A, 114C by the weld layers 118. The weld layers 118 may be interposed between each of the cross beams 113A, 113B, 113C and the side wall 114A. The weld layers 118 may be interposed between each of the cross beams 113A, 113B, 113C and the side wall 114C.

According to exemplary embodiments, each of the weld layers 117, 118 may include one or more of epoxy, polyurethane, acrylic, and silicone. According to exemplary embodiments, the weld layers 117, 118 may be formed by any one method of Metal Inert Gas (MIG) welding, resistance welding, laser welding, and ultrasonic welding. However, the material and formation method of the weld layers 118 are not limited thereto.

According to exemplary embodiments, each of the cross beams 113A, 113B, 113C may have a hollow structure. Due to the hollow structure of the cross beams 113A, 113B, 113C, weight reduction of the battery pack 100 is possible. In addition, when heat is generated in one of the battery cell assemblies 120_1, 120_2, 120_3, the generated heat can be prevented or suppressed from propagating to adjacent battery cell assemblies 120_1, 120_2, 120_3 through the cross beams 113A, 113B, 113C. According to exemplary embodiments, each of the cross beams 113A, 113B, 113C may be extrusion manufactured.

Each of the battery cell assemblies 120_1, 120_2, 120_3 may include battery cells 120C, separators (not shown), and side beams 131A, 132A, 131B, 132B, 131C, and 132C. According to exemplary embodiments, each of the battery cell assemblies 120_1, 120_2, 120_3 may not include a module frame.

The plurality of battery cells 120C and the plurality of separators (not shown) may form a cell stack 121. According to exemplary embodiments, each of the plurality of battery cells 120C may be bidirectional cells. That is, the positive terminals of the plurality of battery cells 120C may be disposed at one end of each, and the negative terminals of the plurality of battery cells 120C may be disposed at the other end of each. Those skilled in the art will be able to easily arrive at an embodiment in which each of the plurality of battery cells 120C is a unidirectional cell based on what is described herein.

Each of the plurality of battery cells 120C may include an electrode assembly, an electrolyte, and a case covering them. The case may be any one of a pouch case, a cylindrical case, and a prismatic case. The pouch case may include an aluminum laminate sheet. The prismatic case and the cylindrical case may include a metal material such as aluminum. The prismatic case may have a rectangular prism shape. The cylindrical case may have a cylindrical shape.

The electrode assembly embedded in the case includes a positive electrode, a negative electrode, and a separator interposed between the positive electrode and the negative electrode. The electrode assembly may be either a jelly-roll type or a stack-type depending on the assembly form. The jelly-roll type electrode assembly may include a wound structure of a positive electrode, a negative electrode, and a separator interposed between the positive electrode and the negative electrode. The stack-type electrode assembly includes a plurality of positive electrodes and a plurality of negative electrodes sequentially stacked, and a plurality of separators interposed between them. According to exemplary embodiments, the plurality of battery cells 120C connected in parallel may constitute a plurality of banks, and the plurality of banks may be connected in series. According to the number of battery cells 120C included in each of the plurality of banks, the output current of each of the battery cell assemblies 120_1, 120_2, 120_3 may be determined. According to the number of the plurality of banks connected in series, the output voltage of each of the battery cell assemblies 120_1, 120_2, 120_3 may be determined.

The plurality of separators may be interposed between the plurality of battery cells 120C. The plurality of separators may include a compressible material. The plurality of separators may absorb the swelling of the plurality of battery cells 120C.

According to exemplary embodiments, the plurality of separators may be thermal barriers. According to exemplary embodiments, each of the plurality of separators may have a high melting temperature and low thermal conductivity. According to exemplary embodiments, each of the plurality of separators may include a flame-retardant material such as ceramic and coated glass material. According to exemplary embodiments, the plurality of separators may be configured to release fire retarding material and fire extinguishing agent in the event of a thermal runaway event.

In this example, the battery cell assemblies 120_1, 120_2, 120_3 are arranged in 3 rows and 2 columns. Accordingly, it can be said that the battery cell assemblies 120_1, 120_2, 120_3 are arranged in 3 * 2. Those skilled in the art will be able to easily arrive at a battery pack including battery cell assemblies 120_1, 120_2, 120_3 arranged in M * N based on what is described herein. Here, each of M and N is any integer of 2 or more.

The battery cell assembly 120_1 may include a first side beam 131A and a second side beam 132A. The first side beam 131A may be on one side of the cell stack 121 of the battery cell assembly 120_1 in the X direction. The second side beam 132A may be on the other side of the cell stack 121 of the battery cell assembly 120_1 in the X direction. The first and second side beams 131A and 132A may be spaced apart in the X direction with the cell stack 121 of the battery cell assembly 120_1 therebetween. The first and second side beams 131A and 132A may overlap the cell stack 121 of the battery cell assembly 120_1 in the X direction.

The battery cell assembly 120_2 may include a first side beam 131B and a second side beam 132B. The first side beam 131B may be on one side of the cell stack 121 of the battery cell assembly 120_2 in the X direction. The second side beam 132B may be on the other side of the cell stack 121 of the battery cell assembly 120_2 in the X direction. The first and second side beams 131B and 132B may be spaced apart in the X direction with the cell stack 121 of the battery cell assembly 120_2 therebetween. The first and second side beams 131B and 132B may overlap the cell stack 121 of the battery cell assembly 120_2 in the X direction.

The battery cell assembly 120_3 may include a first side beam 131C and a second side beam 132C. The first side beam 131C may be on one side of the cell stack 121 of the battery cell assembly 120_3 in the X direction. The second side beam 132C may be on the other side of the cell stack 121 of the battery cell assembly 120_3 in the X direction. The first and second side beams 131C and 132C may be spaced apart in the X direction with the cell stack 121 of the battery cell assembly 120_3 therebetween. The first and second side beams 131C and 132C may overlap the cell stack 121 of the battery cell assembly 120_3 in the X direction.

The first side beam 131A of the battery cell assembly 120_1 may be coupled to the side wall 114D. The first side beam 131A may have a shape complementary to the side wall 114D. The first side beam 131A may include a protruding part 131AP. The protruding part 131AP of the first side beam 131A may overlap the side wall 114D in the Z direction. The first side beam 131A may contact the upper surface and one side of the side wall 114D. The battery pack 100 may include a bolt 140 that penetrates the first side beam 131A and the side wall 114D and is fastened to the base plate 111.

The second side beam 132A of the battery cell assembly 120_1 and the first side beam 131B of the battery cell assembly 120_2 may be coupled to the cross beam 113A. The second side beam 132A of the battery cell assembly 120_1 may contact the upper surface and one side of the cross beam 113A. The one side of the cross beam 113A may be a side of the cross beam 113A facing the battery cell assembly 120_1. The first side beam 131B of the battery cell assembly 120_2 may contact the other side of the cross beam 113A. The other side of the cross beam 113A may be a side of the cross beam 113A facing the battery cell assembly 120_2.

The second side beam 132A of the battery cell assembly 120_1 may have a shape complementary to each of the first side beam 131B of the battery cell assembly 120_2 and the cross beam 113A. The second side beam 132A of the battery cell assembly 120_1 may include a protruding part 132AP. The first side beam 131B of the battery cell assembly 120_2 may include a protruding part 131BP. The protruding part 132AP may be between the protruding part 131BP and the cross beam 113A. The battery pack 100 may include a bolt 140 that penetrates the first side beam 131B, the second side beam 132A, and the cross beam 113A and is fastened to the base plate 111.

The protruding part 132AP of the side beam 132A may contact the cross beam 113A at a first surface 135. The protruding part 132AP of the side beam 132A may contact the protruding part 131BP of the side beam 131B at a second surface 136. The first surface 135 may be substantially parallel to the second surface 136. The first surface 135 may be substantially parallel to the mounting surface 111M of the base plate 111. The second surface 136 may be substantially parallel to the mounting surface 111M of the base plate 111.

The second side beam 132B of the battery cell assembly 120_2 and the first side beam 131C of the battery cell assembly 120_3 may be coupled to the cross beam 113B. The second side beam 132B of the battery cell assembly 120_2 may have a shape complementary to each of the first side beam 131C of the battery cell assembly 120_3 and the cross beam 113B. The second side beam 132B of the battery cell assembly 120_2 may include a protruding part 132BP. The first side beam 131C of the battery cell assembly 120_3 may include a protruding part 131CP. The protruding part 132BP may be between the protruding part 131CP and the cross beam 113B. The battery pack 100 may include a bolt 140 that penetrates the first side beam 131C, the second side beam 132B, and the cross beam 113B and is fastened to the base plate 111.

The coupling of the second side beam 132B of the battery cell assembly 120_2, the first side beam 131C of the battery cell assembly 120_3, and the cross beam 113B may be the same as or similar to the coupling method of the second side beam 132A of the battery cell assembly 120_1, the first side beam 131B of the battery cell assembly 120_2, and the cross beam 113A described above. The bonding surface between the protruding part 132BP of the second side beam 132B and the cross beam 113B may be the same as or similar to the description of the bonding surface 135 between the protruding part 132AP of the second side beam 132A and the cross beam 113A. The bonding surface between the protruding part 132BP of the second side beam 132B and the protruding part 131CP of the first side beam 131C may be the same as or similar to the description of the bonding surface 136 between the protruding part 132AP of the second side beam 132A and the protruding part 131BP of the first side beam 131B.

The second side beam 132C of the battery cell assembly 120_3 and the leveling beam 133 may be coupled to the cross beam 113C. The leveling beam 133 may be a configuration for matching the height in the Z direction with the second side beam 132C. The upper surface of the leveling beam 133 may be positioned at substantially the same level as the upper surface of the second side beam 132C in the Z direction.

The second side beam 132C of the battery cell assembly 120_3 may contact the upper surface and one side of the cross beam 113C. The one side of the cross beam 113C may be a side of the cross beam 113C facing the battery cell assembly 120_3.

The second side beam 132C of the battery cell assembly 120_3 may have a shape complementary to each of the leveling beam 133 and the cross beam 113C. The second side beam 132C of the battery cell assembly 120_3 may include a protruding part 132CP. The battery pack 100 may include a bolt 140 that penetrates the leveling beam 133, the second side beam 132C, and the cross beam 113C and is fastened to the base plate 111.

According to exemplary embodiments, the height in the Z direction of each of the side beams 131A, 132A, 131B, 132B, 131C, 132C may be substantially equal to or greater than the height in the Z direction of the cell stack 121 of each of the battery cell assemblies 120_1, 120_2, 120_3. According to exemplary embodiments, the height in the Z direction of each of the side beams 131A, 132A, 131B, 132B, 131C, 132C may be substantially the same.

According to exemplary embodiments, each of the side beams 131A, 132A, 131B, 132B, 131C, 132C may have a hollow structure. Due to the hollow structure of the side beams 131A, 132A, 131B, 132B, 131C, 132C, weight reduction of the battery pack 100 is possible. In addition, when heat is generated in one of the battery cell assemblies 120_1, 120_2, 120_3, the generated heat can be prevented or suppressed from propagating to adjacent battery cell assemblies 120_1, 120_2, 120_3 through the side beams 131A, 132A, 131B, 132B, 131C, 132C. According to exemplary embodiments, each of the side beams 131A, 132A, 131B, 132B, 131C, 132C may be extrusion manufactured.

The battery pack 100 may be manufactured by coupling the cross beams 113A, 113B, 113C to the pack housing 110 by welding or the like, and coupling the battery cell assemblies 120_1, 120_2, 120_3 to the cross beams 113A, 113B, 113C.

Each of the battery cell assemblies 120_1, 120_2, 120_3 includes side beams 131A, 132A, 131B, 132B, 131C, 132C having shapes complementary to the pack housing 110, so that the assemblability of the battery pack 100 can be improved. Accumulated tolerances during assembly of the battery cell assemblies 120_1, 120_2, 120_3 are eliminated or reduced, making the assembly process of the battery pack 100 easier and improving the durability and reliability of the battery pack 100. In addition, since each of the cross beams 113A, 113B, 113C is coupled to the center beam 112 and the side walls 114A, 114C by welding, impact resistance can be improved because there is no problem of bolt loosening compared to the method of bolting the cross beams 113A, 113B, 113C.

In the battery pack 100, by changing the shape of the bonding surface between the side beams 131A, 132A, 131B, 132B, 131C, 132C and the cross beams 113A, 113B, 113C according to the size of the battery cell assemblies 120_1, 120_2, 120_3 and the shape of the cross beams 113A, 113B, 113C, the ease of assembly process and assembly quality can be improved. Variations in the shape of the bonding surface between the side beams 131A, 132A, 131B, 132B, 131C, 132C and the cross beams 113A, 113B, 113C are explained in the second and third embodiments below.

### (Second embodiment)

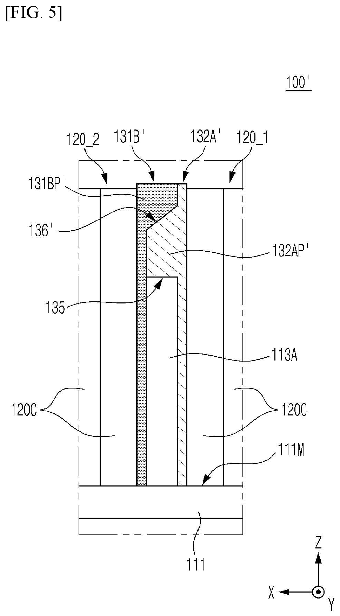

FIG. 5 is a cross-sectional view showing a battery pack 100' according to exemplary embodiments. FIG. 5 shows a portion corresponding to P1 in FIG. 2. The illustration of the bolt (140 in FIG. 2) is omitted in FIG. 5.

In FIG. 5, components having the same drawing numbers as in FIGS. 1 to 4 may have the same description as described in the first embodiment, and the same description will be omitted. Hereinafter, the description will focus on the components of the second embodiment that differ from the first embodiment.

The battery pack 100' of FIG. 5 differs from the battery pack 100 of FIGS. 1 to 4 in the shape of the side beams 132A', 131B'. Specifically, the shape of the bonding surface 136' between the second side beam 132A' of the battery cell assembly 120_1 and the first side beam 131B' of the battery cell assembly 120_2 may be changed.

The second side beam 132A' of the battery cell assembly 120_1 and the first side beam 131B' of the battery cell assembly 120_2 may be coupled to the cross beam 113A. The protruding part 132AP' of the second side beam 132A' may contact the cross beam 113A at the first surface 135. The protruding part 132AP' of the second side beam 132A' may contact the protruding part 131BP' of the side beam 131B' at the second surface 136'.

The first surface 135 may not be substantially parallel to the second surface 136'. According to exemplary embodiments, the second surface 136' may be inclined at a certain angle with respect to the first surface 135. The first surface 135 may be substantially parallel to the mounting surface 111M of the base plate 111. The second surface 136' may not be substantially parallel to the mounting surface 111M of the base plate 111. According to exemplary embodiments, the second surface 136' may be inclined at a certain angle with respect to the mounting surface 111M of the base plate 111.

However, the shapes of the second side beam 132A' and the first side beam 131B' are not limited to those described above. In other exemplary embodiments, the second surface 136' may have an inclination direction opposite to that shown in FIG. 5. In other exemplary embodiments, the second surface 136' may be curved.

### (Third embodiment)

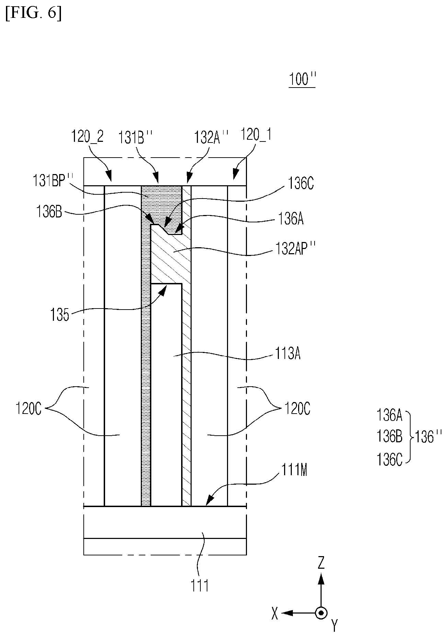

FIG. 6 is a cross-sectional view showing a battery pack 100" according to exemplary embodiments. FIG. 6 shows a portion corresponding to P1 in FIG. 2. The illustration of the bolt (140 in FIG. 2) is omitted in FIG. 6.

In FIG. 6, components having the same drawing numbers as in FIGS. 1 to 4 may have the same description as described in the first embodiment, and the same description will be omitted. Hereinafter, the description will focus on the components of the third embodiment that differ from the first embodiment.

The battery pack 100" of FIG. 6 differs from the battery pack 100 of FIGS. 1 to 4 in the shape of the side beams 132A", 131B". Specifically, the shape of the bonding surface between the second side beam 132A" of the battery cell assembly 120_1 and the first side beam 131B" of the battery cell assembly 120_2 may be changed.

The second side beam 132A" of the battery cell assembly 120_1 and the first side beam 131B" of the battery cell assembly 120_2 may be coupled to the cross beam 113A. The protruding part 132AP" of the second side beam 132A" may contact the cross beam 113A at the first surface 135. The protruding part 132AP" of the second side beam 132A" may contact the protruding part 131BP" of the side beam 131B" at the second surface 136".

The second surface 136" may include a first portion 136A, a second portion 136B, and a third portion 136C.

The first portion 136A may be substantially parallel to the first surface 135. The first portion 136A may be substantially parallel to the mounting surface 111M of the base plate 111. The second portion 136B may be substantially parallel to the first portion 136A. The second portion 136B may be substantially parallel to the first surface 135. The second portion 136B may be substantially parallel to the mounting surface 111M of the base plate 111. The first portion 136A may be closer to the battery cell assembly 120_1 in the X direction than the second portion 136B. The first portion 136A may be closer to the mounting surface 111M of the base plate 111 in the Z direction than the second portion 136B.

The third portion 136C may be between the first portion 136A and the second portion 136B. The third portion 136C may connect the first portion 136A and the second portion 136B. The third portion 136C may be inclined with respect to each of the first portion 136A and the second portion 136B. The third portion 136C may not be substantially parallel to the mounting surface 111M of the base plate 111. The third portion 136C may be inclined at a certain angle with respect to the mounting surface 111M of the base plate 111.

However, the shapes of the second side beam 132A" and the first side beam 131B" are not limited to those described above. In other exemplary embodiments, the first portion 136A may be farther from the mounting surface 111M of the base plate 111 in the Z direction than the second portion 136B.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A battery pack comprising:
a base plate;
first and second battery cell assemblies on the base plate; and
a cross beam separating the first and second battery cell assemblies in a first direction,
wherein
each of the first and second battery cell assemblies comprises:
a cell stack comprising battery cells arranged in the first direction;
a first side beam on a first side surface of the cell stack in the first direction; and
a second side beam on a second side surface of the cell stack in the first direction, wherein
the second side beam of the first battery cell assembly comprises a portion interposed between the cross beam and the first side beam of the second battery cell assembly.

2. The battery pack of claim 1, wherein
the second side beam has a shape complementary to each of the cross beam and the first side beam.

3. The battery pack of claim 1, wherein
the first side beam comprises a first protruding part protruding in the first direction,
the second side beam comprises a second protruding part protruding in the first direction, and
the second protruding part is interposed between the cross beam and the first protruding part.

4. The battery pack of claim 3, wherein
the second protruding part comprises:
a first surface in contact with the cross beam; and
a second surface in contact with the first protruding part.

5. The battery pack of claim 4, wherein
the first surface and the second surface are parallel.

6. The battery pack of claim 5, wherein
each of the first surface and the second surface is parallel to a mounting surface of the base plate.

7. The battery pack of claim 4, wherein
the second surface comprises a portion inclined with respect to the first surface.

8. The battery pack of claim 7, wherein
the second surface comprises:
a first portion parallel to the first surface;
a second portion parallel to the first surface; and
an inclined third portion connecting the first portion and the second portion.

9. The battery pack of claim 8, wherein
the first portion is closer to the first battery cell assembly in the first direction than the second portion, and
the first portion is closer to a mounting surface of the base plate than the second portion.

10. The battery pack of claim 1, further comprising:
a bolt penetrating the cross beam, the second side beam of the first battery cell assembly, and the first side beam of the second battery cell assembly.

11. The battery pack of claim 10, wherein
the bolt is fastened to the base plate.

12. The battery pack of claim 1, further comprising:
a center beam extending in the first direction on the base plate; and
a weld layer between the center beam and the cross beam.

13. The battery pack of claim 12, further comprising:
side walls on the base plate and surrounding the center beam, the cross beam, and the first and second battery cell assemblies; and
a weld layer between the cross beam and the side walls.

14. The battery pack of claim 1, wherein
a height of the first side beam in a direction perpendicular to a mounting surface of the base plate is greater than a height of the cell stack in the direction perpendicular to the mounting surface, and
a height of the second side beam in the direction perpendicular to the mounting surface is greater than the height of the cell stack in the direction perpendicular to the mounting surface.

15. The battery pack of claim 14, wherein
a height of the first side beam in the direction perpendicular to the mounting surface is equal to a height of the second side beam in the direction perpendicular to the mounting surface.
